# EUROPEAN PATENT APPLICATION

(11) **EP 4 779 915 A1**
(43) Date of publication of application: **22.07.2026**
(21) Application number: 25152719.8
(22) Date of filing: 20.01.2025
(51) Int. Cl.: H04L 1/1829, H04L 1/1867

(54) **INTERNET OF THINGS DEVICE AND READER**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

The present disclosure relates to an Internet of Things, IoT, device comprising the following. A transceiver of the IoT device transmits a response to a message in a first access procedure with a reader. Circuitry of the IoT device determines whether to start a re-access timer for receiving, during a feedback period, feedback on the response transmitted in the first access procedure.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing an loT device to perform an improved loT communication procedure.

In an embodiment, the techniques disclosed here feature an Internet of Things, IoT, device comprising the following. A transceiver of the loT device transmits a response to a message in a first access procedure with a reader. Circuitry of the loT device determines whether to start a re-access timer for receiving, during a feedback period, feedback on the response transmitted in the first access procedure.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows an overview of an A-loT system;
- **Fig. 3**: illustrates a first topology of an loT communication between a base station and an loT device,
- **Fig. 4**: illustrates a second topology of an loT communication between a base station and an loT device, with an intermediate node,
- **Fig. 5**: illustrates data collisions in an access procedure;
- **Fig. 6**: illustrates a signaling diagram of the access procedure of Fig. 5;
- **Fig. 7**: illustrates a signaling diagram of the access procedure of Fig. 5 including a feedback mechanism;
- **Figs. 8, 9, 11, and 13**: illustrates simplified and exemplary signaling diagrams of the access procedure of Fig. 5 according to implementations of improved loT access procedures;
- **Figs. 10 and 12**: illustrates flow diagrams corresponding to the signaling diagrams discussed in Figs. 9 and 11;
- **Fig. 14**: illustrates a general, simplified and exemplary block diagram of an loT device and a node;
- **Fig. 15**: illustrates functional structure of the circuitries pertaining to the loT device and the node;
- **Fig. 16**: illustrates a flow diagram for the loT device according to an exemplary embodiment of the present disclosure;
- **Fig. 17**: illustrates a flow diagram for the node according to an exemplary embodiment of the present disclosure;
- **Fig. 18**: is a signaling diagram illustrating an exemplary exchange between an loT device and a node according to an exemplary embodiment of the present disclosure; and
- **Fig. 19**: shows exemplary functional split options in 5G O-RAN.

### DETAILED DESCRIPTION

### 5G NR system architecture and protocol stacks

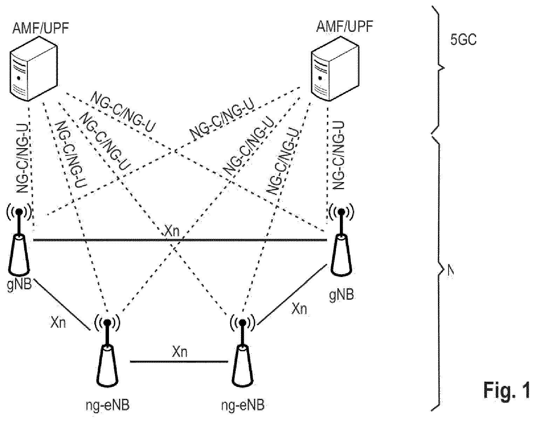

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gN Bs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.1.0, section 4).

### Ambient IoT Devices

An ambient Internet of Things device (A-loT device) is a new type of device, introduced to be supported by 5G NR or possible later generation (e.g. 6G) technology. A-loT devices can be understood as loT devices that have the ability to harvest energy from natural or ambient sources, such as vibration, light, heat or a carrier wave (CW), e.g. provided by the base station, or the intermediate node, or a separate CW node. The energy harvesting technology can be crucial for the loT market to reduce the device operation costs. The power consumption and complexity of A-loT devices can be less compared to existing 3GPP technologies, such as MTC (machine type communication), NB-loT (NarrowBand loT), or RedCap (Reduced Capability). For instance, an ambient loT device can be operated with a small battery or without a battery and further may not require battery replenishment. Another term is "zero energy device", due to their capability to operate without a dedicated battery source. An A-loT device may be an ultra-low-complexity device with ultra-low power consumption for very-low end loT applications. Examples for A-loT devices include - without any limitation - wearables, smart home devices, automotive devices, sensors, smart keys, healthcare devices, warehousing, electronic shelf label, etc.

A-loT devices may lack RRC states. For example, the A-IoT protocol stack may support only MAC layer and a physical (PHY) layer, which can provide service to the topmost layer (for e.g A-loT application layer) to send/receive data over the A-loT air interface, i.e. the interface between the reader and the device. Such new specifically designed operation states may have to be defined and configured for A-IoT devices. For example, ON, OFF, and RETENTION/SLEEP states may be introduced in terms of discontinuous transmission or energy saving criteria of low power devices.

ARQ (Automatic Repeat Request) and Hybrid ARQ transmission protocols that ensure reliable data delivery may not be supported by A-IoT devices. A-loT devices have limited power available, resulting in reduced time periods of communication capability. Further, full device registration with the network might be difficult for loT devices, although a simplified registration or identification might be necessary.

A-loT devices may not support mobility (e.g. no cell selection/re-selection/handover functions, as in legacy NR).

The above characteristics of an A-loT device facilitates the wide deployment of the devices for various applications. The integration of A-loT devices into 5G and future technologies poses a demanding problem that is addressed in the present disclosure.

Importantly, it is noted that the present disclosure is not limited to A-loT devices, but may also be applicable to any other loT devices (e.g. other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the terms low-power-consumption device or low-complexity transceiver device could be used instead as well.

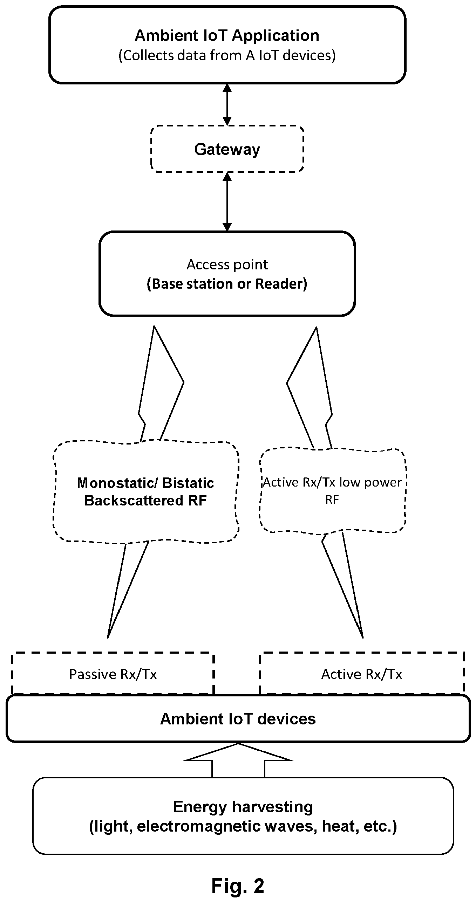

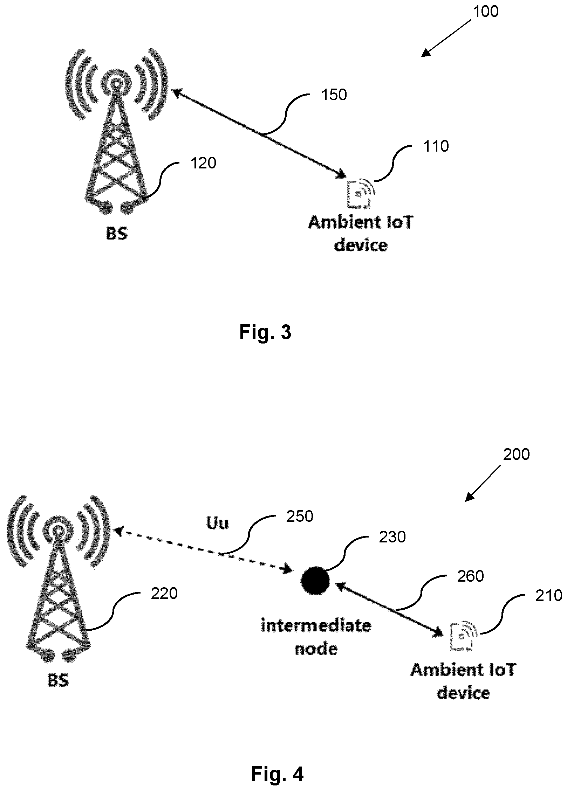

**Fig. 2** is an overview of an A-loT system, including the Ambient loT devices, an access point, an optional gateway and including the A-loT applications. As apparent from Fig. 3 the A-loT devices may harvest energy from their environment, i.e. their ambient. The A-loT devices may be able to communicate using passive reception and transmission (e.g. passive Rx/Tx) by monostatic or bistatic backscattering or alternatively may have an active Rx/Tx (low power) RF. The A-loT devices may communicate via an access points (or a base station or reader) with A-loT applications that may collect data from the A-loT devices. A gateway may be optionally between the access point and the A-loT applications.

More details on use cases, deice constraints and performance requirements as well as KPIs (Key Performance Indicators) can be obtained from the document 3GPP TR 22.840 v19.0.0.

### Topologies

Particularly, two different topologies are exemplarily considered in this disclosure. More details on topologies can be obtained from the document 3GPP TR 22.848 v19.0.0 and TR 22.840 v19.0.0.

In a first topology 100 as illustrated in **Fig. 3****,** an A-loT device 110 directly and bidirectionally communicates with a base station 120 over a wireless channel 150. In general, the A-IoT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

In a second topology as illustrated in **Fig. 4****,** an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 4****,** this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

For any topology in general, the reader is an equipment that directly communicates with the A-loT device, for e.g in topology 1 the reader is a base station and for topology 2 the reader is an intermediate node (e.g. UE).

Communication channels between A-loT reader and A-loT device are herein referred to as reader to device (R2D) for data transmissions from reader to device, and device to reader (D2R) for data transmissions from device to reader.

### IoT Communication

Communication by loT devices covers both active transmission as well as passive backscattering (see Fig. 2). In particular, backscattering devices do not necessarily have an active transmission component but are able to modulate information on the signal (e.g. carrier wave mentioned above) received from another node (e.g. CW node, such as a UE, a WiFi node, or access point). Active transmission allows higher range and better quality of service (QoS), compared to backscattering devices.

Energy-efficient communication is one key aspect for Ambient loT devices. In said respect, an On-Off-Keying (OOK) line coding scheme can be used as a modulation technique for loT communication in 3GPP 5G and future (e.g. 6G) communication systems, due to its simplicity and energy efficiency.

Ambient loT devices may support different types of services, such as "inventory" and "command". For either of the service request types, a baseline communication procedure may be exemplarily assumed, where in a first step (step A) an initial access trigger is sent to the device, followed by an optional random-access-like procedure (step B), and a data communication procedure between reader and device (step C). The reader may transmit a message such as an Initial Trigger Message, which is also referred to as paging message, indicating one or multiple loT devices that should respond. In response, the triggered loT devices may perform a random-access-like procedure and/or data communication.

Correspondingly, the Initial Trigger message may comprise suitable identification of a single loT device or a group of loT devices. Furthermore, in another example, the Initial Trigger message may not comprise any identification, in which case any and all loT devices that receive the Initial Trigger message could respond.

No agreements have been reached regarding an ID for an loT device, including the exact format so as to uniquely identify an loT device (at least in the 3GPP system). It can be expected that a larger number of loT devices will be operational within a network (or serviced by an access point). The loT device ID might have a large size in order to facilitate an unambiguous identification within the whole network.

Details on the initial access (also called random access) for loT communication have been discussed already as well. The initial access procedure of loT devices can be achieved for example in three steps (3-step random access procedure) or in two steps (2-step random access procedure). Additionally or alternatively, it is possible that the initial access procedure of loT devices can be achieved by four or more steps.

No agreements have been reached in view of a proceeding with a down selection in view of the various types of accesses, e.g. the 2-step random access, the 3-step random access, and Contention-Free Random Access (CFRA). Further, a unified design can used where at least the 3-step and 2-step procedure are specified.

In either case, Msg1 would be the first message from the loT device, in response to the initial trigger message (MsgO). This can referred to as step A.

One example implementation of the initial access procedure may involve the following steps.

In an exemplary two or three step loT initial access procedure the loT device may transmit a Msg1 to the reader, which may include a random ID that is generated by the loT device (e.g. it may be generated randomly or generated based on the loT device ID) in response to the initial trigger message (MsgO). The device ID can be expected to uniquely identify the device at least within the 3GGP system. Sending the Msg1 can be seen as being part of step B.

If a three-step procedure is used, the reader may transmit a Msg2 back to the loT device, echoing the ID (e.g. random ID) received in Msg1 (e.g. including the same received ID in Msg2). The Msg2 may optionally include further information, such as information on the occasion (e.g. time and/or frequency) for the loT device to transmit Msg3. Communicating the Msg2 can be seen as being part of step B.

The loT device may transmit a Msg3 to the reader, including e.g. a Device ID of the loT device and/or any other upper-layer data (depending on the upper-layer request). The loT device considers the contention resolution as successful, if the Msg2 is received including the same random ID as in Msg1. Communicating the Msg3 can be seen as being part of step B.

A R2D feedback can but need not always be sent by the reader to the loT device. The R2D feedback can be considered to handle the Msg3 transmission failure (which may occur for various reasons). In other words, it is understood that the A-loT reader can transmit a message, e.g. Msg2, or retransmit a message, e.g. R2D feedback, to a specific device for the random ID, for example if the reader doesn't receive Msg3 from that random ID. Further, it is not defined if R2D feedback indicates for the device to start a re-transmission or re-access.

It has been agreed that if a random access procedure fails during execution, e.g. any message transmitted during steps A and B fails, the device is expected to re-access using the feedback indication sent by the reader to repeat the random access procedure in another opportunity. In other words, the device is not expected to autonomously re-access to repeat the random access procedure in another opportunity but the loT device is expected to follow the reader. For example, in cases failure of message communication in Step A or Step B and re-transmission is not possible, the loT will have to follow the reader by repeating the random access procedure in another opportunity controlled/provided by the reader (i.e. retry the random access), for example by receiving an initial trigger message (MsgO). Alternatively, if one of re-transmission or re-access is possible, the reader can repeat the R2D "upper layer command", e.g. R2D feedback, to trigger the device to re-transmit the same D2R "response" (i.e., device just follows the received R2D to transmit D2R), e.g. re-transmission of Msg3, i.e. repeating communications relating to step B.

As discussed above, it has been agreed that that the R2D feedback is optional. Further, it is not defined if R2D feedback triggers a re-transmission or a re-access. Thus, the loT-device cannot rely on receiving R2D feedback. This has some implications on using R2D feedback as failure/success feedback indication for the device in R2D.

This optional arrangement for the R2D failure/success feedback indication also applies to following D2R data, also referred to as Step C, after the random access procedure for re-access purposes.

As discussed above a 2-step loT initial access procedure can be configured. Alternatively, the 2-step loT initial access procedure can be termed shortened loT initial access procedure, considering that it is shorted compared to the above normal loT initial access procedure. In response to the initial trigger message (Msg0), the loT device may transmit a Msg1 to the reader, which may include a Device ID of the loT device and/or any other upper-layer data (depending on the upper-layer request). Optionally, an additional random ID can be included in the Msg1.

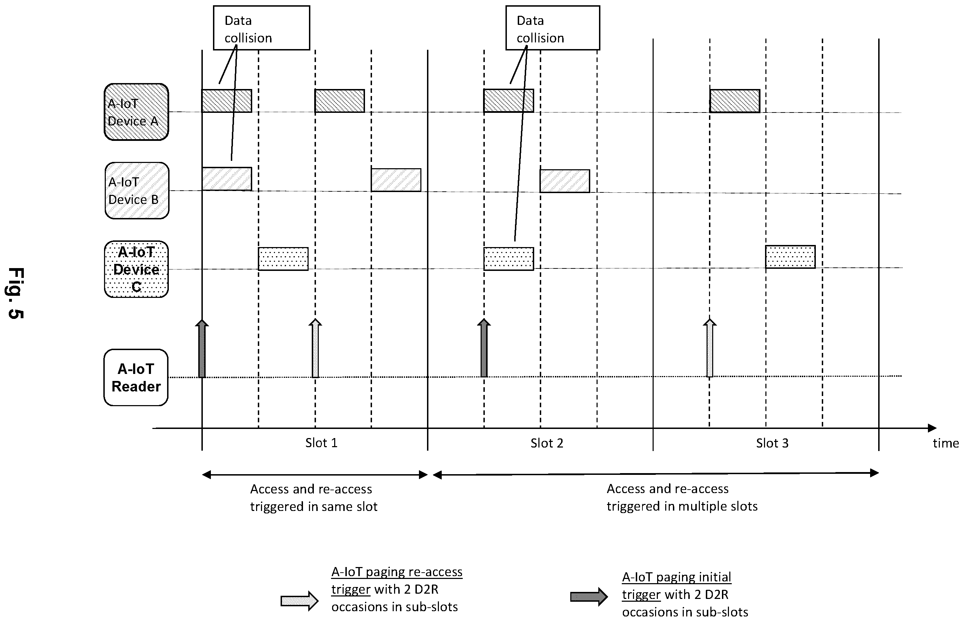

The reader may transmit a Msg2 back to the loT device, echoing some information from Msg1, such as the Device ID (or random ID) received in Msg1. Additionally, the reader may transmit a R2D feedback that can be used as an explicit feedback. In light of the above agreements and considerations, **Fig. 5** shows an example of an A-loT paging message (Msg0) when triggered for inventory or command operation to an A-loT group of devices (e.g., using the group ID). The random access procedure could include an initial trigger message, e.g. Msg 0, and one or more re-access trigger messages to control re-access triggering of failed A-loT devices. Such a solution provides multiple opportunities for each loT-device to respond, especially when triggered in a larger A-loT group size with higher contention between devices to transmit using a single D2R opportunity.

As discussed above, the A-loT devices can be triggered for re-access on another occasion using the R2D success/failure feedback from the reader. The paging re-access message can be sent within the same slot as the initial trigger (where each slot is further divided into sub-slots) or triggered in subsequent slots.

The paging re-access occasions are used to overcome collisions between devices during contention-based random access attempts. The initial paging trigger could be scheduled by the reader based on the inventory (or command) request sent by a core network (CN), while the paging re-access occasions could be decided and (re)scheduled by the reader itself based on the anticipated collision among a group of devices.

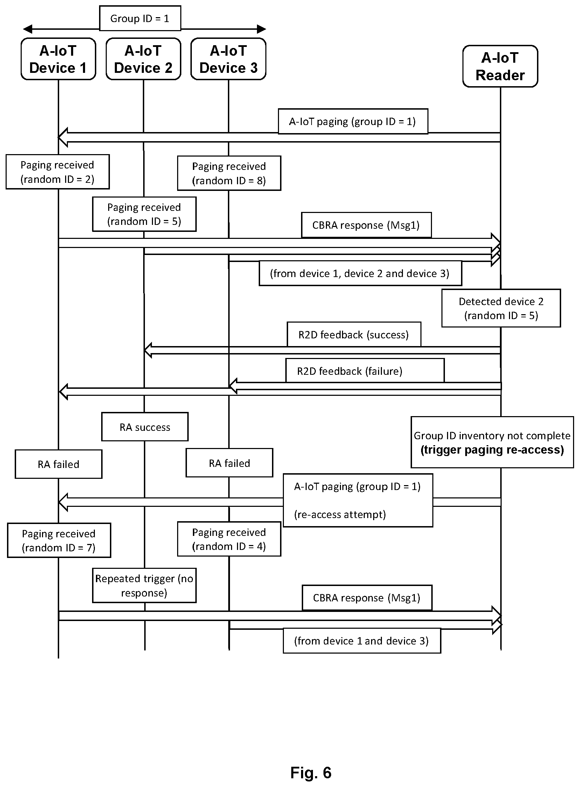

**Fig. 6** shows signaling diagram of the access procedure discussed in Fig. 5. As discussed above, the reader controls the paging re-access attempts to those devices that failed random access by sending re-access opportunities. In contention-based random access, the reader may fail to receive random access responses from some of the A-loT devices due to contention seen when multiple devices transmit on a D2R occasion.

If the A-loT device receives R2D feedback as successful, then no re-access is required on the next attempt. For example, this is the case for A-IoT Device 2 in Fig. 6.

If an A-loT device received R2D feedback as a failure, then the device can re-access on another occasion triggered for the same inventory/command procedure triggered for the group ID. For example, this is the case for A-loT devices 1 and 3. The reader can send failure feedback to all devices that did not receive D2R using a single message (as a broadcast message) or using individual messages based on the random ID received during the 3-step random access.

As discussed above, it has been agreed that in the event of a D2R data transmission failure, the device will follow the reader's instruction and the device is not expected to re-access autonomously. Furthermore, it is supported to re-access at another opportunity controlled by the reader. Further, it is agreed that an optional explicit R2D failure/success feedback indication for at least Msg3 is supported for re-access purposes.

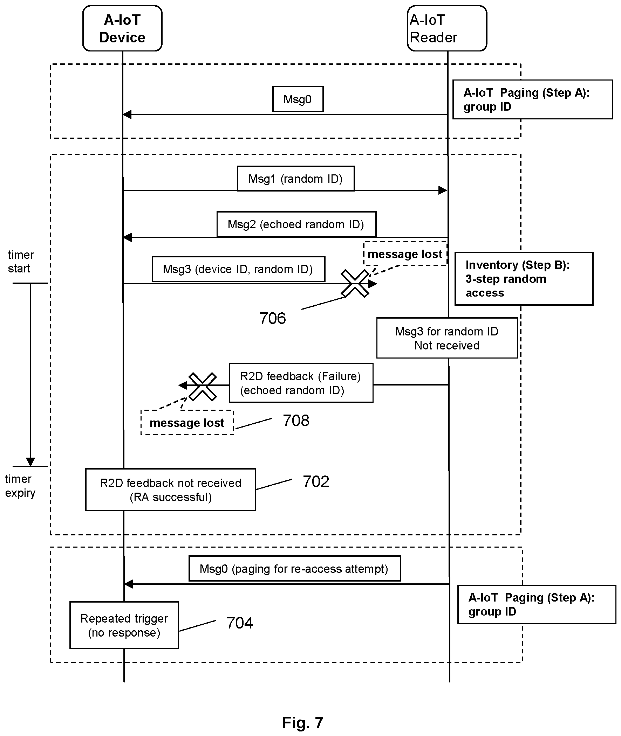

This optional explicit R2D failure/success feedback can help trigger re-access attempts is made optional so the reader does not have to send any feedback on some occasions. This is shown in the flow diagram in Fig. 7

For example, if the R2D feedback (failure) is not received by the device, the device may implicitly assume that the Msg3 transmitted in D2R was successful at 702 and the loT device does not attempt to re-access since autonomous re-access is not expected at 704. However, as indicated by the cross at 706 to the D2R Msg3 in Fig. 7, the Msg3 may be lost and thus not received by the reader. As a result, the loT device may not perform a re-access later, as shown in Fig. 7.

Similarly, if the reader sends a feedback message (e.g., to indicate the failure of the last D2R), e.g., R2D feedback, but the message is not received by the device, as indicated by the cross at 708 in Fig. 7, the device would still assume that the last transmitted D2R was successful at 702 and would not perform a re-access later at 704.

This will cause the devices to stop responding, and the inventory or command operation will be incomplete for the failed devices.

In such a situation, the procedure is incomplete if the A-IoT device must rely solely on the feedback message sent by the reader to interpret the condition for re-access at another opportunity. This may have other drawbacks, such as delaying the inventory process of the current device until a new paging request is triggered after a certain amount of time. This could result in the CN having to trigger paging requests to the reader and start the search/inventory all over again.

Another difficulty, as discussed above, is that explicit R2D failure/success feedback is completely optional, so the device may not even have received R2D feedback from the loT device.

### Further improvements

As apparent from above, 3GPP intends implementing an loT communication procedure, according to which a plurality of loT devices can be simultaneously triggered (e.g. by a reader) to initially access the channel to transmit data to the reader. Consequently, in response to a suitable Initial Trigger message, a plurality of loT devices will try to access the same channel to the reader. This may be lead to interference and contention between the various loT devices, which either delays or prevents loT devices from successfully accessing the channel. Furthermore, given the optional failure/success feedback mechanism, it is not clear how the A-loT device behaves when the message in D2R is not received by the reader, or how the A-loT device behaves when the feedback message in R2D is not received by the A-loT device. In addition, the behavior of the A-loT device with respect to the expected duration in which D2R retransmission requests are to be sent by the reader (e.g., Msg2 re-transmit) may affect the power consumption by the loT device for buffering previously transmitted messages and may affect the timing requirements for the reader to send R2D feedback to trigger re-access.

The inventors thus have identified the possibility to define an improved loT communication procedure and parts thereof, which facilitate meeting the above needs and avoiding one or more of the above described disadvantages. The present invention relates to different solutions and variants for such an improved loT communication procedure, particularly to an improved loT communication procedure for an initially access of the loT device.

### Solutions

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a reader communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or loT device or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term loT device covers any loT devices (such as Ambient loT, Critical loT, Massive loT, etc.) but also other devices with possibly power or processing limitations. Correspondingly, the present disclosure is not limited to A-loT devices mentioned above, but may also be applicable to any other loT devices (e.g. other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the term low-power-consumption device or low-complexity transceiver device could be used instead as well. Examples for A-loT devices include - without any limitation - wearables, smart home devices, automotive devices, sensors, smart keys, healthcare devices, etc.

The term "base **station"** or **"radio base station"** or **"node"** or **"reader"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **"reader"** refers to an entity communicating with an A-loT device and, for example, receiving information from or transmitting information to the A-loT device; it may be also referred to as a "node". The "node/reader" can be e.g. a base station, or a UE or an intermediate node etc.

Communication between the A-loT device and the base station or an intermediate node is typically standardized and may be defined by different layers, such as PHY, MAC, RRC etc. (see above background discussion).

As used herein, the term **"message"** specifically refers to a formatted and standardized unit of data transmission that carries encapsulated information, including trigger signals (also referred to herein as triggering signals), paging signals, and data signals between devices or systems within a network. In the context of loT or communication systems, a message can refer to a trigger signal, for example to initiate a specific action or process, e.g. an access process, a paging signal, for example to locate or notify an loT device when there is an incoming communication, such as a data packet, and/or a data signal that carries the actual information or data payload. The network can send a message when it needs to notify the loT device of an incoming event. Trigger and paging signals within the packet can prompt a response or action at the receiving end, such as triggering a specific process, such as a access process, initiating data transmission, or triggering a sensor connected to the loT device.

As used herein, the term **"response"** refers to a reply or reaction provided by a receiving device or system, e.g. the loT device, in response to a received message, such as a trigger signal, a paging signal, or a data signal. It represents the acknowledgement or response sent back to the sender, e.g. the node, to indicate the outcome of the received message. Responses are used to acknowledge receipt, provide requested information, or indicate the success or failure of an operation.

As used herein, the term "re-access timer" refers to a timer during which feedback for an access process can be received. The re-access timer can be an optional configuration, and the loT device can interpret messages based on the condition of whether or not the re-access timer is started. For example, if the re-access timer is configured or indicated, the timer can be started. If the timer is not configured or not indicated, the timer is not started. The re-access timer can be started in response to another condition, such as the expiration of another timer, such as a retransmission timer, during which retransmission requests can be received. While the re-access timer is running, the loT may have low power consumption, for example, by not holding data in a energy consuming volatile memory device.

As used herein, the term "feedback period" refers to the length of time that a re-access timer expects to receive a feedback, such as a feedback communicated on the network.

The loT device may have several **operation states,** in the following referred to as states such as ON, OFF, and SLEEP (also referred to as RETENETION). The loT device may communicate in ON state, receive some signals in SLEEP state, and does not support transmission and reception in OFF state. It may harvest energy in OFF and/or SLEEP states. The rate of energy consumption of the device might be different for states, e.g., with higher, medium, and low for the state ON, SLEEP, and OFF, respectively. The state ON may be referred to as a high-power mode and the states SLEEP and OFF may be referred to as operation state for harvesting energy or low-power mode. The states ON and SLEEP and may be referred to as state for communicating with the reader. Further operation states may be defined by ready to send and/or receive data, maintaining volatile memory content, switched off, a capability to harvest energy, low battery power, stand by or sleep state.

As used herein **energy harvesting** is the process of capturing and converting, in general small amounts, of energy from the environment into usable electrical energy for the loT device. This energy is typically generated from natural or existing energy sources like carrier waves, light, heat, and/or vibrations.

The present disclosure relates to an A-loT device, a base station, and an intermediate node connected to a base station, methods of communication between the A-loT device and the base station and the A-loT device and the intermediate node.

Different and exemplary implementations of the improved transmission procedure are explained in the following. For the explanation of the different implementation, some exemplary and simplifying assumptions are made.

Following an exemplary assumption, the following description discusses the failure/success of an initial access procedure with respect to the figures. In the figures, an initial paging message is transmitted. The mechanism discussed can also be used in other access procedures than an initial access procedure, e.g., re-access procedures, and the access procedure can comprise at least one of an initial access procedure; a re-access procedure; an inventory procedure; and a command procedure. In particular, the access procedure can consist of an inventory only procedure, an inventory and command procedure, or a command only procedure. In particular, for each of these procedures, data is sent in D2R in response to messages, e.g. an initial paging procedure, received in R2D. The purpose of command procedures is, for example, to implement changes or control the behavior of the network or devices in a controlled and deterministic manner.

By way of example, the above usage type "inventory procedure" can be understood as an identification operation that may involve reading the device identification information stored in the loT device. The purpose of inventory procedures is, for example, to ensure that the network has up-to-date and accurate information about its components and resources.

According to an exemplary assumption in the following description with respect to the figures, the loT device transmits a response to a second received message, e.g. Msg2 described in Fig. 7 above. The mechanism discussed can also be used in response to other messages, e.g. the initial paging message, e.g. Msg0 described above, or any other response to a message in D2R communication.

According to an exemplary assumption in the following description with respect to the figures, a three-step random access process is used. Alternatively, the mechanism described may be applicable to other access schemes, such as a two-stage random access processes or a CFRA processes.

### Solution - determining whether a re-access timer is started

It is provided an Internet of Things (IoT) device, e.g. an ambient loT (A-loT) device, comprising a transceiver, which, in operation, transmits (is configured to transmit), a response to a message in a first access procedure, e.g. an initial access procedure or a re-access procedure, with a reader; and a circuitry, which, in operation determines (is configured to determine), whether to start a re-access timer for receiving, during a feedback period, feedback on the response transmitted in the first access procedure.

It is further provided a reader (also referred to as node) comprising a transceiver, which in operation, transmits (is configured to transmit), in a first access procedure, e.g. an initial access procedure or a re-access procedure, a message to an Internet of Things (IoT) device, e.g. an ambient loT (A-loT) device; and a circuitry, which in operation, determines (is configured to determine), whether the loT device starts a re-access timer for receiving, during a feedback period, feedback on a response to the message transmitted in the first access procedure.

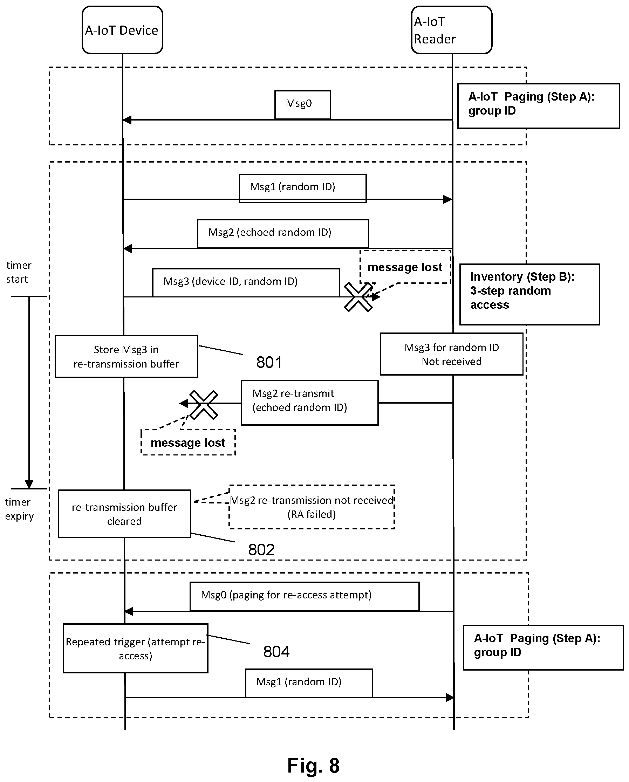

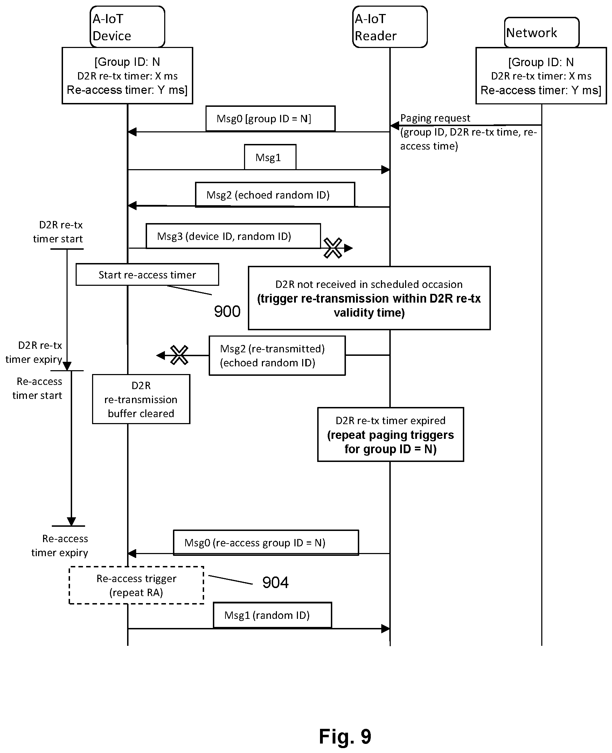

The above situation is discussed in **Figs. 8****,** **9****,** **11****, and** **13****,** which is similar to the situation described in Fig. 7. Additionally, as shown in Fig. 8, the circuitry, in operation, may determine to not to start re-access timer. Alternatively, as indicated for example at 900 in Fig. 9, the circuitry, in operation, can determine to start re-access timer. In other words, compared to the solution of Fig. 7, the new solutions specify that the timer of Fig 7, which is not specified as re-access timer or re-transmission timer, is explicitly defined as at least one of re-access timer and a communication timer such as a re-transmission timer. In particular, in the solutions shown in Figs. 9 to 13 show the solutions with re-transmission timer and re-access timer.

For example, based on the determination of whether to start the re-access timer, the circuitry in operation may determine, as indicated at 802 in FIG. 8, that the first access procedure has failed. In the exemplary situation of FIG. 8, this determination is based on an additional condition. For example, in the situation of Fig. 8, the additional condition is that the device is configured with the optional timer, which is specified as a re-transmission timer. Thus, the loT device performs a re-access at 804 and the failure discussed in Fig. 7, specifically not sending a response to the repeated trigger at 704, is avoided.

Similarly, based on the determination of whether to start the re-access timer, the circuitry in operation may determine, for example, that the first access has failed. In the exemplary situation of Fig. 9, this determination is based on an additional condition. For example, in the situation of Figure 9, the additional condition is that the re-access timer has expired. Thus, the loT device performs a re-access at 904.

As discussed above, the re-access timer, and in particular a re-access timer configuration, can be made optional to indicate whether the device is expected to perform implicit failure detection or implicit success detection, for example when explicit success/failure feedback is not received in R2D.

The mechanism allows the loT device to perform implicit failure detection, and implicit success detection can be controlled by at least one of the loT reader, the loT device, and the network.

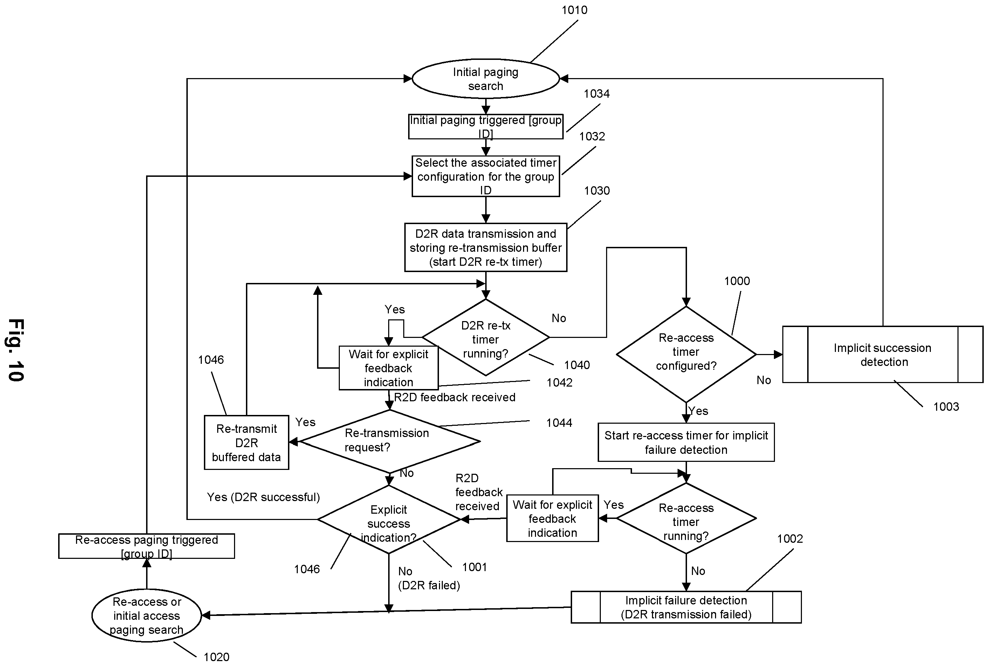

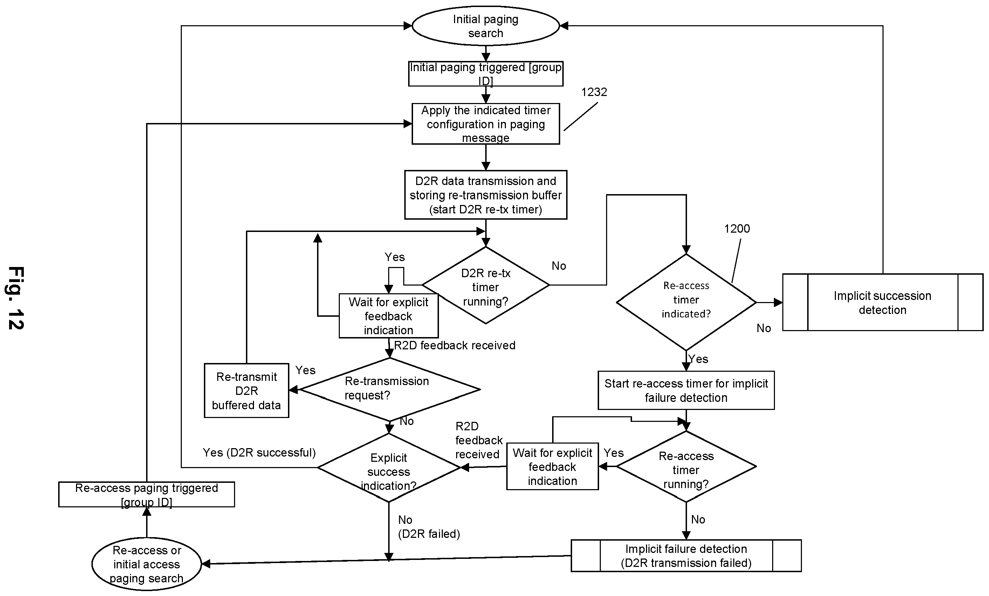

Various examples of when such a re-transmission timer is used are discussed in particular with reference to Fig. 8. Further, various examples in case such a re-access timer is started are discussed with particular reference to Figures 9, 11 and 13. Further, the flow diagrams in Figs. 10 and 12 discuss examples of how the loT makes a decision based on such an optional re-access timer. The following described implementations may be combined with the above solution.

### 1^{st} Implementation - determining that a re-access timer is started

As shown in Figs. 10 and 12, the loT device according to the solution determines at 1000 in Fig. 10 or at 1200 at Fig. 12 to start the re-access timer. In particular, Figs. 10 and 12 discuss the situation where a re-access timer is configured or indicated. Further, the circuity, in operation determines whether a last communicated message has failed or been successful based on at least one a further condition.

For example, the reader may send an explicit failure/success indication and the circuitry determines at 1001 based on the explicit feedback, whether the last communication was successful or failed. In the case of success, the loT may proceed immediately with a next process, for example a new paging search at 1010.

In other words, if, for example, a re-access timer is configured for the loT device, then the device can further perform implicit failure detection, for example, if no R2D success feedback is received within a later described re-access timer expiration. This approach gives at least one of the network and reader more control over whether to allow implicit failure detection and re-access for certain devices or device types.

According to a modification, an implicit failure indication is possible. For example, the circuity, in operation can determine that a last communicated message has failed based on at least one further condition. For example, according to a 1^{st} variant shown in Fig. 10 at 1002 the circuity, in operation determines that a last communicated message has failed based on the expiration re-access timer at 1002. Additionally or alternatively, according to a 2^{nd} variant not shown in the Figures, the circuity, in operation determines that a last communicated message has failed based on a re-transmission request for the response. This facilitates to avoid to communicate an explicit failure indication of the last communicated message in the network.

In case of failure detection, i.e. if determining that the last communicated message has failed either by an explicit feedback or an implicit determination, the loT can initiate a second access procedure controlled by the reader as indicated at 1020.

For example, the loT devices initiates the second access procedure at a next access opportunity controlled by the reader. This is for example indicated at 804 at Fig. 8. Without the timer, as indicated at 704 in Fig. 7, the loT device would not expect a repeated trigger.

Further, the second access procedure comprises at least one of a re-access procedure, an inventory procedure, a command procedure, and a new initial paging search.

### 2^{nd} Implementation - determining that a re-access timer not started

As discussed in Fig. 8, the loT device according to the solution determines to not start the re-access timer. Further, the circuitry, in operation, determines whether the first access procedure was successful based on a communication mechanism of the loT device. The 2^{nd} implementation may be in particular combined with the variants discussed in the 1^{st} implementation.

For example, the loT device may implicitly determine that the first access process was successful at 1003 in view of using the re-transmission timer.

In addition to the solution discussed in Fig. 7, the 2^{nd} implementation proposes to base the decision whether the first access procedure was successful based on a communication mechanism of the loT device.

According to a 1^{st} variant, the communication mechanism comprises starting a re-transmission timer in response to transmitting the response for receiving, during a communication time period, a request for retransmitting data related to the first access procedure. For example, as shown in Fig. 8, during the communication period data related to the response communicated in D2R, data are held in a memory unit such as a re-transmission buffer. As the timer expires, the memory unit is cleared at 802. Based on this further condition, it can be implied that first access procedure failed. Further, as shown for example in Fig. 10 at 1003, the circuity, in operation, determines that the first access procedure was successful upon expiry of the re-transmission timer. This is a possible implicit determination. Thus, the device is capable to identify that the D2R has failed but the device is not allowed to perform re-access.

According to a 2^{nd} variant, which may be implemented additional to the 1^{st} variant and which is not shown in the figure, the communication mechanism comprises operating the loT device in a low-power operation state. As discussed above, in the low-power operation state, for example an OFF state or a SLEEP state, the device consumes less energy that in a high-power operation state, e.g. the ON state. In this case the time taken by the device to harvest energy (or recharge with power) before it could resume operation could be specified for the purpose of implicit re-access detection.

For example, the circuitry, in operation, determines a low-power-period-threshold and determines that the first access procedure failed based on unavailability of the feedback within the operation of the loT device in the low-power operation state below the low-power-period-threshold'. Further, as discussed above, in response to the detection that the first access procedure failed, the device initiates a second access procedure. In other words, when the device has completed energy harvesting to a certain level that it could perform re-accessing in next paging occasion, for example under the further condition that the last access procedure, e.g. an inventory or command operation, failed. Thus, an additional re-access timer need not to be started or configured. Instead, a maximum time for which the loT devices could utilize for harvesting energy could be specified, for example in the technical standard. Additionally, all the devices that comply with this requirement to be designed to recharge, for example to at least to a certain specified threshold, within the specified time, i.e. less or equal to the specified maximum time, are successful.

According to a 3^{rd} variant, which may be implemented additional to the 1^{st} variant and which is not shown in the figure, the communication mechanism comprises operating the loT device in an operation state for communicating with the reader. As discussed above, in the communication state, for example an ON state or a SLEEP state, the device is at least adapted to receive messages. The energy storage capacity and the energy consumption in order to complete at least one operation of the first access process, e.g. inventory/ command, could be specified to loT devices to comply with the intended loT application. Then accordingly the re-transmission buffering described in the 1^{st} variant will also be designed based on such requirement and until the available energy does not drop less than certain specified threshold the loT device can perform re-transmission of the last transmitted D2R data, since the device can store the information with enough energy. In other words, the circuitry, in operation, determines that the first access procedure was successful in response to operate the loT device in the operation state for transmitting, the ON state, for a minimum on-time period. This facilitates that the additional D2R retransmission timer discussed in the 1^{st} variant need not be configured, instead the minimum time for which loT devices should remain in ON state could be specified, for e.g. in the technical specification.

### 3^{rd} implementation - further feedback mechanisms

Further processes may be used to determine whether the first access procedure was successful or not. The 3^{rd} implementation may be in particular combined with the variants discussed in the 1^{st} and 2^{nd} implementation. In particular, the circuitry, in operation, determines to start the re-access timer.

According to a 1^{st} variant, the circuitry, in operation, determines based on an energy condition and an energy indication for indicating an amount of energy stored by the loT device, whether the first access procedure was successful. An energy condition may be derived based on operating the loT device in an operation such as ON, OFF, or SLEEP, which have been discussed above. Further, the energy condition may be at least one threshold, the threshold may be used to indicate that the device is to be operated in a specific state, such as an ON state. An indication for indicating an amount of energy stored by the loT device may be derived by operating the loT device for specified time in a certain state and/or by measuring an energy stored in the loT device. In particular, the circuity, in operation determines whether the first access procedure was successful based on amount of energy stored by the loT and the at least one threshold.

In more detail, the circuity, in operation, can determine in case the re-access timer is started that the first access procedure has failed if the amount of energy stored by the loT is less than a first threshold and no feedback is received before the amount of energy stored by the loT is greater than the second threshold. Alternatively, the circuity, in operation can determine in case the re-access timer is not started that the first access procedure was successful if the amount of energy stored by the loT becomes greater than a second threshold and no feedback has been received. In particular, success or failure determination by the device can be triggered after the second threshold (i.e. device going to ON state) but the condition is it should be configured or specified for the device.

For example, the first access process, e.g. inventory or command operation, can be triggered when the energy available is greater than the second threshold. This second threshold can indicate device ON status. Then, until the available energy does not drop less the first threshold, the loT device can perform actions such as re-transmission of the last transmitted D2R data, since the device can store the information with enough energy. Thus, the loT device could be designed where devices are triggered for a first access process, such as inventory or command operation, with respect to an energy harvesting cycle. Further, loT devices can be triggered in a first access process, such as inventory or command operation, when the energy available is greater than the specified threshold, for example greater than a threshold to indicate device ON status. Further, an loT device can be trigger that have to recharge to another specified threshold, e.g. a threshold 2 to indicate device OFF or charging status, before it could be triggered again.

According to a 2^{nd} variant that may be combined with the 1^{st} variant, the circuitry, in operation, determines whether to start at least one communication timer for receiving, during a communication time period, a next message with the reader. In particular, the circuitry, in operation, starts the at least one communication timer after transmitting the response for communicating, during a communication time period, a next message with the reader. Based on starting the communication timer, the loT device may determine whether the first access procedure was successful. For example, the communication timer is a re-transmission timer or a timer for operating the device in a state such as an on-state. In particular, during the communication time period, the loT device may respond to messages from the reader. Thus, the loT device can respond to requests from the reader, e.g. re-transmission requests. Further, the circuitry, in operation, may determine an energy stored in an energy storage unit of the loT device and determines the communication time period based on the energy stored in the energy storage unit. For example, the loT determines that the energy stored is sufficient to operate the loT device for the communication time period in an ON period or hold data for a re-transmission timer. For example, the communication time period is configured for the loT device and the circuitry, in operation, reduces the configured communication time period based on the energy stored in the energy storage unit. The duration for which A-loT device can store the last transmitted D2R data in memory, to support re-transmission could depend on multiple factors. These factors include in particular and ON period of the loT device and hold data in a memory unit during a re-transmission timer is running. For example, the amount of energy available at the device before having to undergo another energy harvesting cycle can be low. If the available energy is low and/or if the device determines it cannot store for longer duration as configured, then during such situation the timer value could be set to less than the configured value. In particular, in such situation the loT device may use the re-access timer. For example, if re-transmission request sent from the reader is received after the timer has expired, the device could interpret this as failure feedback and continue to perform re-access in the next available paging occasion. Additionally, this variant may be combined with the above discussed energy condition indicating that enough energy has been recharged, for example by energy harvesting. In other words, the hardware capability of an energy storage unit of the device to support longer or shorter operations, such as a storage duration for a memory unit, can be reflected by the communication time period.

### Exemplary aspect - IoT uses additional an optional re-transmission timer

An exemplary aspect is discussed in the Figures 8 to 13. In this exemplary aspect, the above describe communication timer is a re-transmission timer for receiving, during the communication time period, a request for retransmitting data related to the first access procedure.

For example, the re-transmission timer is started with sending the response to the message in the first access procedure, as for example shown in Fig. 9. The circuitry determines to start the re-transmission timer at 1030 in Fig. 10. In particular, the data related to the first access procedure comprise data related to the last transmitted response. For example, the data comprise a random ID that may be necessary at the device as long as the re-transmission is running during the first access procedure, to process the re-transmission requests addressed by the reader using the random ID, which may have been generated earlier, e.g. during the start of the random access trigger as shown in Fig. 9.

For storing data, in particular for storing the data hold during the re-transmission timer is running, the loT device may comprise a memory unit and the memory unit, in operation, is configured for storing data related to the first access procedure during the communication time period. As shown in Fig. 8 at 802, the circuitry, in operation, determines to clear the memory unit upon expiry of the re-transmission timer. As discussed above, timer expiry and/or clearing the memory may be used to determine whether the first access procedure was successful. In particular, the memory unit comprises a volatile memory unit.

Additionally, the loT device may comprise an energy storage unit and the energy storage unit is configured to supply power to the memory unit, in particular the above discussed volatile memory unit. For example, the energy storage unit comprises or consists of a capacitor. In particular, storing data in the memory unit, for example for re-transmission, for longer duration may result in increased complexity at the device. Further, if the duration of the stored data in memory is kept short, an energy storage unit such as capacitor can be used to supply energy to the volatile memory unit at the device. This makes the design of the loT device less complex and more cost efficient. In other words, the energy storage unit may have an influence on the communication time period. A short communication time period that may comply with the less complex loT device may increase the number of re-accessing attempts executed by the device. This consumes more power in case the first access procedure attempt has failed multiple times before resolving contention in a larger group. This issue is resolved by the optional re-access timer and the determination whether to start the re-access timer. In other words, communication time period, e.g. the D2R re-transmission time duration for storing data related to the first access procedure, and the optional re-access timer are decoupled to accommodate the complexity and the energy requirements of the A-loT devices accordingly.

The data related to the first access procedure can comprise a random identification (ID). Storing data such as a random ID facilitates that for example in the situation in Fig. 8 the device along with Msg3 data are buffered for re-transmission during the first random access procedure. The re-transmission requests can be addressed by the reader using the random ID, which was sent during the start of the random access trigger, i.e. with Msg1.

Additionally or alternatively, the data can comprise a pointer pointing to data stored at an upper layer of the loT device. For example, a lower layer such as the MAC layer (also called AS layer) may not be specified to store data related to the first access, e.g. the last transmitted D2R data, in a memory unit such as a re-transmission buffer. Instead a pointer pointing to the data available at the upper layer could be stored at the lower layer to process the further requests of the reader such as a retransmission request. For example, the lower layer would request the upper layer to re-submit the data pointed by the pointer value when the request such as a re-transmission request is intended, or the pointer is cleared to process with ongoing procedure with the next available data at the upper layer.

Further, in case the circuitry, in operation, determines to start the re-access timer, the communication timer may expire before the re-access timer expires as for example shown in Fig. 9. In particular, the re-access timer starts after expiry of the communication timer. Alternatively, in case the optional communication timer is not started, the re-access timer starts upon transmitting the response. In other words, beginning of the re-access timer can be of two types, which can be specified for example in a technical specification or configured at the device. The re-access timer is started along with the last transmitted D2R sent by the A-loT device or the re-access timer is started when the communication timer expires, as shown in Figs. 9 to 13. In case of both timers have the same length, one timer may not be started. This facilitates to save energy.

Fig. 10 shows a solution with such a retransmission timer. At 1040, the circuitry determines whether the retransmission timer is running. In case the retransmission timer not running, the process proceeds with the determination if the re-access timer is started at 1000. In case the retransmission timer running, the process proceeds with waiting for explicit feedback from the reader at 1042. If the feedback is received, it may be determined at 1044 if the feedback indicates to respond by re-transmitting data or the feedback is an explicit success indication at 1046. In case of not receiving an explicit feedback indication, the process can process can proceed at 1020.

### 4^{th} implementation - timer-configuration-information for the re-access timer and/or re-transmission timer

The 4^{th} implementation may be in particular combined with variants discussed in the 1^{st} to 3^{rd} implementations. In particular, the circuitry, in operation, determines to start the re-access timer.

According to a further implementation the transceiver, in operation, receives timer-configuration-information for a configuration of the re-access timer and/or retransmission timer, the configuration of the re-access timer for determining the feedback period and the configuration of the retransmission timer for determining the communication time period. In the following, variants for receiving the information for the configuration of the re-access timer are described. The description may identically apply to the solutions for receiving the information for the configuration of the retransmission timer.

Based on receiving this information, the timer may decide whether to start the re-access timer. For example, if the receiver receives such information, the loT may start the re-access timer. Receiving this information facilitates that re-access to paging messages can be controlled efficiently in terms of power consumption by reducing the repeated attempts of random access when anticipated. Further, these solution facilitates to reduce contention probability in D2R between devices, for example if some of the devices have relatively longer or shorter time for re-accessing in a next attempt. Further, in case the variants are combined with re-transmission timer, these solutions facilitate that the device complexity to store D2R re-transmission buffer by longer or shorter time could be controlled based on the implementation requirement of the loT application group or the capability of loT devices.

According to a 1^{st} variant, the loT device is configured with at least one re-access timer configuration. For example, an loT device is configured with a timer value for the re-access timer. According to a 2^{nd} variant, the timer-configuration-information comprises a re-access timer configuration. For example, the loT indicates a timer value, for example within the message, for the re-access timer. According to a 3^{rd} variant, the circuitry, in operation, determines whether to change at least one re-access timer configuration that configured is according to the 1^{st} variant based on the receive timer-configuration-information, which is for example received according to the 2^{nd} variant. According to a 4^{th} variant, the choice of 1^{st} variant or the 2^{nd} can depend on a further condition, for example an identification (ID) of the device.

In view of the 1^{st} to 4^{th} variant, the message can comprise the timer-configuration-information. As for example shown in Fig. 9, the message is an initial message for the first access procedure.

The 1^{st} variant is in particular discussed with reference to Figs. 9 and 10. In particular, the loT device is configured with a plurality of re-access timer configurations. As shown in Fig. 10 at 1032, the circuitry, in operation, selects a re-access timer configuration based on the timer-configuration-information. For example, at least one of the re-access timer configurations is associated with an identification (ID) for identifying at least one loT device. In the solution shown in Fig. 10 at 1034, the ID is a group ID for identifying a plurality of loT devices. Alternatively, the ID can be a device ID for identifying one loT device. According to an example, the loT device can be configured with plurality of re-access timer configurations, e.g. parameters for inventory/ command procedures. The timer configurations can be stored at the loT device, for example in a non-volatile memory, or can be obtained during device operation. To identify the timer configurations, the Device ID and Group ID are used. Configurations such as timer values required for re-transmission duration and re-accessing intervals can be assigned and associated with the configured device ID or with the corresponding group ID. For example the device is triggered by paging message (Msg0) in Fig. 9 comprising or consisting of a group ID or device ID, the configuration parameters associated with that of the group ID or device ID are obtained before it will be used during the first access procedure, such as inventory or command procedure.

The 1^{st} variant of the 4^{th} implementation is further discussed with reference to Figs. 9 and 10 in combination with various variants discussed in the above implementations 1 to 3. For example, various values for timer configurations can be configured independently based on the timer event requirements of individual groups. The timer values can be configured in association to one or more groups (e.g. using group ID) assigned to the device. In the above example, each group when triggered for inventory or command procedure, is expected to be scheduled with different timer periods which may depend on, for example, the size of the group.

One or more timer configuration as specified for the purpose of D2R re-transmission buffering or implicit re-access detection can have one or more alternative definitions as discussed in above implementations 1 and 3. Additionally, a [D2R to R2D]max timer configuration can be used to determine the next response available from the reader, which can be reused for the purpose of D2R re-transmission timer, since even the re-transmission feedback requests from the reader in R2D should also be responded within this time, followed by D2R data transmitted by the device. These alternative definitions help to reduce the total number of timer configurations specified to the device.

Additionally, timer values can be configured independently based on the device capabilities within the A-loT group, for example as discussed in the 3^{rd} implementation. Some of the devices (even within a group) can be configured with different timer values depending on the energy harvesting capability or energy consumption efficiency as compared to the other devices within the group. According to a first example, if the energy capability of some devices is low, these devices could be configured with very short communication period, e.g. duration for D2R re-transmission timer, so that the memory storage requirement for re-transmission is less complex. According to a second example, if some devices are not expected or required to implicitly perform re-accessing of paging (e.g. when feedback from the reader fails), then the re-access timer may not be configured, i.e. the re-access timer may not be started, or can be configured with longer duration, longer feedback period, than the sustainable time of the device where the device runs out of energy before this timer expires. In such cases, the reader when scheduling D2R re-transmission occasions or re-access occasions may have to accommodate for the longest timer value of event, when triggered with varied timer behavior of the devices within the group.

In view of the example, the operation of the reader may be described with reference Fig. 9. According to the example, the reader also uses timer configurations of the corresponding group ID or device ID to schedule re-transmission occasions and re-access occasions when triggering the first access procedure, such as an inventory or command procedure. Device configurations may be available at the reader itself or could be provided by the network along with the paging request sent to the reader. The reader schedules D2R re-transmissions within the communication timer period, i.e. the validity of retransmission timer. The device starts retransmission timer to monitor R2D channel for re-transmission requests to re-transmit last transmitted response, i.e. the previous D2R data (e.g re-transmission of Msg2). The reader can send failure feedback indication in R2D within the validity of re-access timer, if this timer is stared, i.e. configured. If the device receives R2D feedback indication from the reader, the timer is stopped, and the re-access attempt shall be performed on the next paging occasion. The reader can schedule additional re-access paging triggers after expiry of the re-access timer, as configured for the triggered devices. The re-access timer will be used by the device to prohibit implicit re-access decisions in case the R2D feedback from the reader is not received during this time. Once the timer is expired, the device can perform paging re-access during next opportunity.

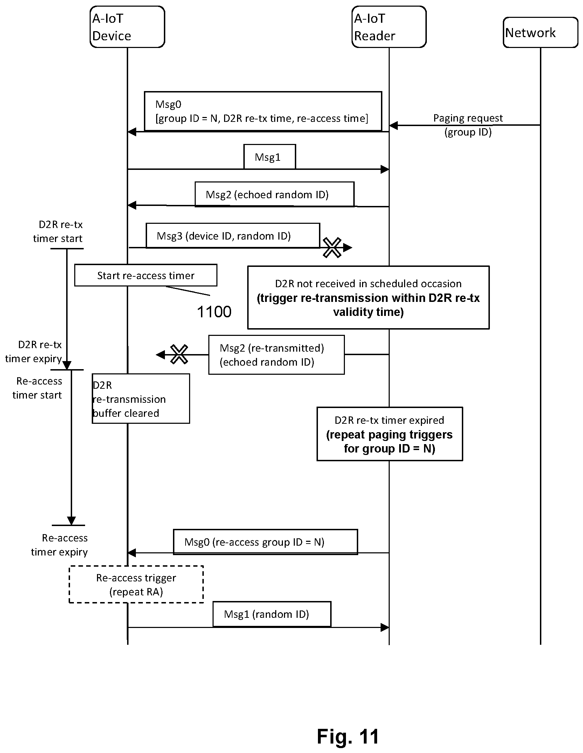

The 2^{nd} variant is in particular further detailed in Figs. 11 and 12. Fig. 12 is similar to Fig. 10 described above. A difference to Fig. 10 is at 1232 in Fig. 12. In particular, the loT applies at 1232 the received re-access timer configuration. Further, the device may determine at step 1200 if the re-access timer is indicated.

Fig. 11 is similar to Fig. 9. A difference to Fig. 9 is that the initial paging comprises timer configurations, e.g. re-access timer configuration and re-access timer configuration. In Fig. 11, timer configurations for D2R re-transmission and re-access triggers could be sent with the paging message when triggered by the reader. Since reader schedules paging and D2R transmit occasions for the group of devices, this facilitate to control the duration for the individual events based on the size of the triggered group and the energy consumption/ harvesting efficiency of the devices within the group.

Additionally, the D2R retransmission timer behavior followed by the device and reader is same as explained in the 1^{st} variant, but the value of the timers according to the 2^{nd} variant can be dynamically indicated in paging. It can be considered that the [D2R to R2D]max time value can be dynamically indicated.

As in the 1^{st} variant, the re-access timer start behavior can be of two types as explained above. But the value will be dynamically indicated in paging message if the devices are expected/ allowed to perform implicit failure detection, otherwise this value need not be indicated, and thus, the device determines to not start the re-access timer.

Re-transmission buffer stored for the random access procedure (i.e. Msg3 in 3-step random access or Msg1 in 2-step random access) would be addressed by the reader for re-transmission requests using for example the random ID, while the follow-up procedures after random access can be address using the device specific ID.

The 2^{nd} variant facilitates full control to the reader to schedule the individual events and dynamically indicate the event timers, herein discussed as the communication time period (also referred to as retransmission time value) and the feedback period (also referred to as re-accessing timer values) to group of devices.

Depending on the use case scenario different timer values could be used to trigger different access procedures such as inventory and command procedure accordingly. For example, at times if the energy capacity of the device low, it could be indicated with very short duration for storing D2R re-transmission buffers in memory (or even disable re-transmission for devices if necessary), i.e. reduce communication time period. At times if devices are not required to implicitly re-access paging when feedback from the reader fails, then the re-access timer need not be indicated or feedback period could be set to longer duration than re-access triggering period (or even set to longer than the sustainable time of the devices where the devices runs out of energy before this timer expires).

In view of the 3^{rd} variant, one timer configuration can be stored at the loT device. In other words, the timer configurations could be dedicated to the device, irrespective of any group ID (or device ID) assigned or triggered in the paging procedure. The device always uses the same value unless the configuration is changed (for e.g. by updating the non-volatile memory).

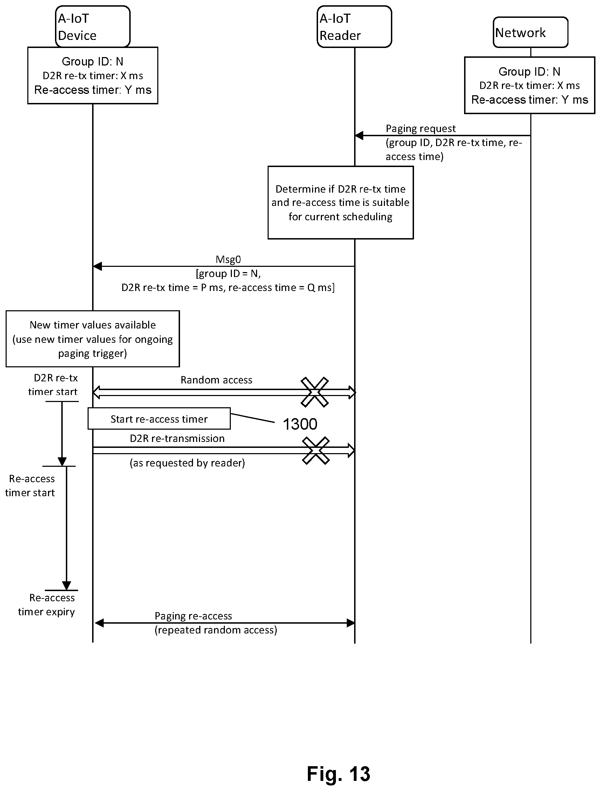

The 3^{rd} variant is in particular further detailed in Fig. 13. The timer configurations may be configured at the loT devices (with any options described in the 1^{st} variant) to be used for retransmission and re-access purpose, but the configured values may not be suitable for certain scenarios when the reader schedules data dynamically during paging. In such cases the reader may send modified timer values indicated within the paging message, based on the solutions discussed in the 2^{nd} variant. In another possibility, some of the group IDs could be configured with timer configurations while others could be indicated by the reader dynamically.

If no timer configuration is sent with the triggered paging message, then the device would perform inventory or command operation using the configured timer values, as discussed in the 1^{st} variant. If timer configuration is indicated, for example with the triggered paging message, then the device would perform inventory or command operation using the new timer values, as discussed in the 2^{nd} variant. Further, the re-access timer value can be indicated as zero (0ms) to disable the device behavior to perform implicit failure detection, instead the device would perform implicit success detection as described above. To disable the re-access timer a largest number of the integer for this purpose (e.g. 0xFF in a 8-bit integer variable) can be used to enable implicit success detection. Thus, the reader can control the implicit behavior of the devices dynamically based on the scenario for which the paging is triggered.

The 3^{rd} variant facilitates that it is not mandatory for the paging message to include timer configurations every time the paging is triggered, for inventory or command operations. If the determined timer event requirements satisfies with the configured values, then the paging message size sent on R2D would be less.

According to the 4^{th} variant, either the 1^{st} or the 2^{nd} variant can be used. For example, loT devices is assigned to a group ID can be specified to follow one of the 1^{st} or 2^{nd} variant either to be configured with timer values associated with the corresponding group ID as described in the 1^{st} variant or explicitly indicated along with the paging message as described in 2^{nd} variant. Further when devices are associated with multiple group IDs then each of these groups can be indicated to follow different solutions. One group ID could be always configured with the associated timer parameters while the other could purely depend on the configurations indicated on the paging message triggered for that group. The loT application or use cases can follow a specific solution among the 1^{st} variant or the 2^{nd} variant.

Some examples where the implementation can be specific to the use cases are shown below. Device types can be specified according to use cases, for example device type 1 can be specified to follow the 1^{st} variant while device type 2 (2a or 2b) can be specified to follow the 2^{nd} variant. In

For example, device A (or type 1) has no energy storage, no independent signal generation/amplification, i.e. uses backscattering transmission. Device B (or type 2a) has energy storage, no independent signal generation, i.e. backscattering transmission. Use of stored energy can include amplification for reflected signals. Device C (type 2b) has energy storage, has independent signal generation, i.e., active RF components for transmission. In other words, depending on an energy storage of the device, one of the 1^{st} or 2^{nd} variant may be selected.

Depending on the type of the reader implementation, the solution could be specified to follow either the 1^{st} variant or the 2^{nd} variant. For example, base station reader could be specified to apply 2^{nd} variant since the coverage between devices and the reader are relatively larger and the requirement for scheduling at A-IoT interface must be flexible and dynamic. An intermediate reader could be specified to apply the 1^{st} solution since the scheduling at A-loT interface may be less flexible due to shorter expected coverage distance between device and the reader.

### Further implementations

As mentioned above, functionality re-access is a study topic. With the currently optional feedback and a timer for receiving a R2D feedback, it is unclear how the re-access can be implemented..

To facilitate the communication considering the mentioned limitations, the loT device determines, based on the configuration of a re-access timer and/or a retransmission timer if the a second access procedure can be a re-access or an initial paging search is necessary.

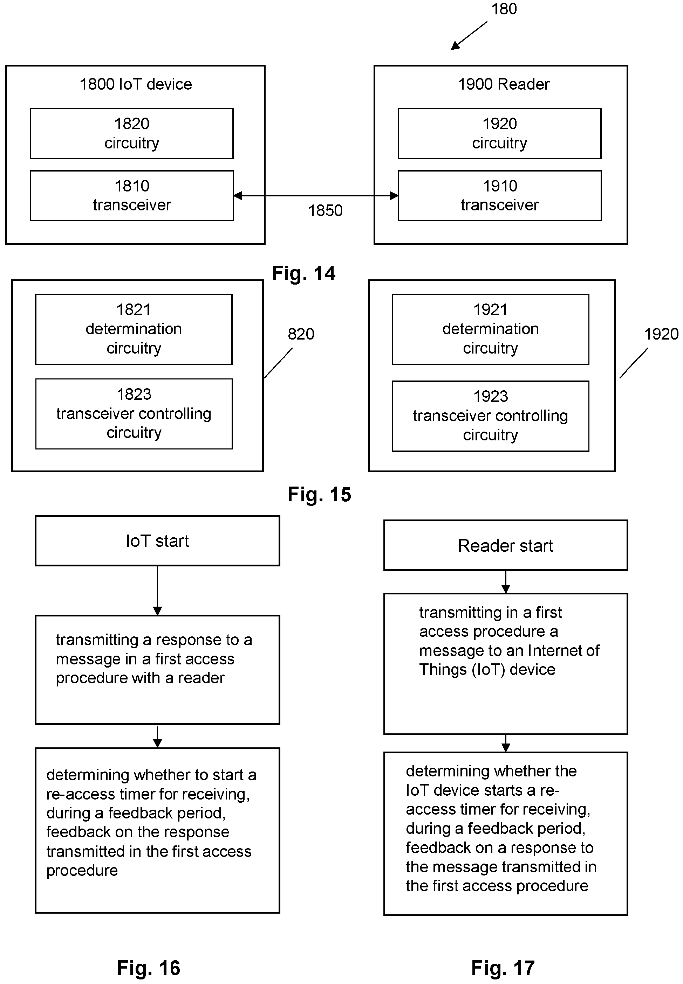

**Fig. 14** illustrates a general, simplified and exemplary block diagram of an loT device 1800 and a reader (base station or intermediate node connected to a base station) 900 forming a communication system 180. In the following, it is exemplarily assumed that reader 1900 is a base station functioning as a scheduling device like an eNB or gNB (network node). The loT device 1800 may be a wearable, smart home device, automotive device, sensor, smart key, or healthcare device, for example.

The loT device 1800 and the base station 1900 (eNB/gNB) are communicating with each other over a (wireless) physical channel 1850, respectively, using their transceivers 1810 (IoT device side) and 1910 (base station side). The base station 1900 and the loT device 1800 are capable of transmitting as well as receiving radio signals via the channel 1850. Together, the base station 1900 and the loT device 1800 form a communication system 180, for example, a 5G or future communication system. The communication system 180 may further include other entities such as further base stations, intermediate nodes and/or loT devices. Any of the above-described solutions and the implementations may be implemented in theA-loT device 1800, the base station 1900 and/or communication system 180 where appropriate.

The loT device 1800 comprises a transceiver 1810 and a (processing) circuitry 1820, and the base station 1900 comprises a transceiver 1910 and a (processing) circuitry 1920. The transceiver 1810, 1910 in turn comprise and/or function as a receiver and/or a transmitter. In this disclosure, in other words, the term "transceiver" is used for hardware and/or software components that allow the loT device 1800, and the base station 1900 to transmit and/or receive radio signals over the wireless channel 1850, for example, a physical channel. Moreover, the term "circuitry" includes processing circuitry formed by one or more processors or processing units, etc.

The circuitry 1820 may perform any determinations and operations described above with respect to the embodiments. The transceiver 1810 may transmit and/or receive signals as described with respect to the embodiments. The circuitry 1820 may control the transceiver 1810 to perform the transmissions and/or receptions.

The circuitry 1920 may perform any determinations and operations described above with respect to the embodiments. The transceiver 1910 may transmit and/or receive signals as described with respect to the embodiments. The circuitry 1920 may control the transceiver 1910 to perform the transmissions and/or receptions.

In some embodiments, the transceiver 1810 of the loT device 1800 communicates a response such as response to message in a first access procedure. The circuitry 1820 of the loT device 1800 determines, whether to start a re-access timer for receiving, during a feedback period, feedback on the response transmitted in the first access procedure.

In some embodiments, the transceiver 1910 of the reader 1900 communicates a message in a first access procedure. The circuitry 1920 of the reader 900 determines, whether the loT device starts a re-access timer for receiving, during a feedback period, feedback on a response to the message transmitted in the first access procedure.

The circuitries may be configured by software to perform the functions as described in any of the above embodiments. As shown in **Fig. 15** the circuitry 1820 of the loT device may further comprise a functional module referred to as determination circuitry 1821 for performing the determination. A transceiver controlling circuitry 1823 is a functional module that controls the transceiver 1810 (in Fig. 15) to receive the message. Moreover, as shown in **Fig. 15****,** the circuitry 1920 of the base station or an intermediate node may further comprise a functional module referred to as determination circuitry 1921 for performing any determinations. A transceiver controlling circuitry 1923 is a functional module that controls the transceiver 1910 (in Fig. 15) to transmit the message.

A corresponding exemplary method for an loT device, as shown in **Fig. 16****,** comprises the following steps performed by an loT device:
transmitting a response to a message in a first access procedure with a reader; and
determining whether to start a re-access timer for receiving, during a feedback period, feedback on the response transmitted in the first access procedure. A corresponding exemplary method for node, as shown in **Fig. 17****,** comprises the following steps performed by a reader:
transmitting in a first access procedure a message to an Internet of Things, loT, device; and
determining whether the loT device starts a re-access timer for receiving, during a feedback period, feedback on a response to the message transmitted in the first access procedure.

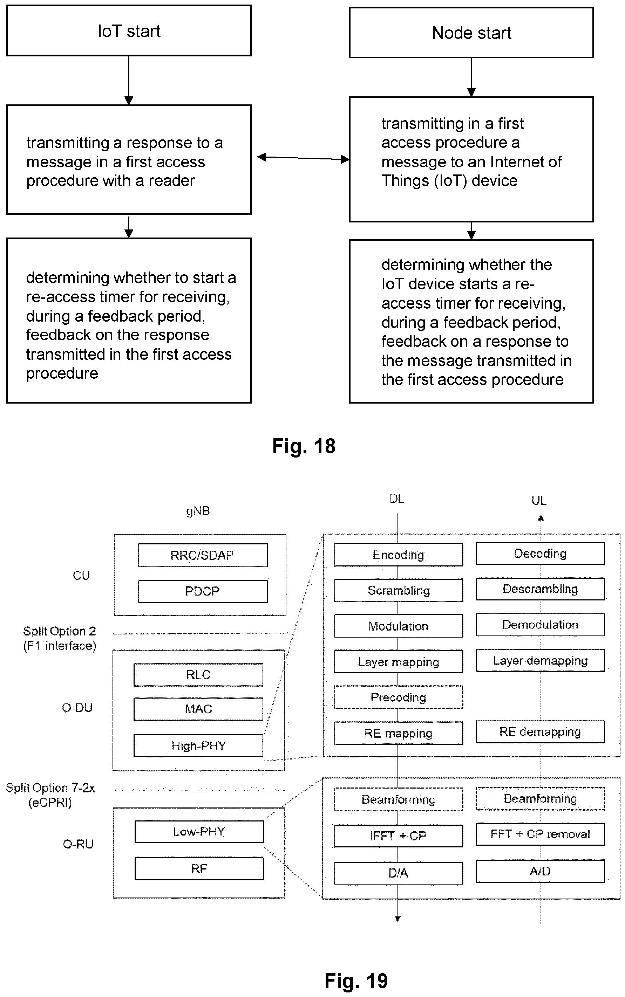

**Fig. 18** is a signaling diagram of an exemplary and simplified implementation of the improved transmission procedure, illustrating the exchange of common understanding between the different participating entities (here the loT device and the reader) and the steps performed at these entities. The loT behavior and node behavior follow the above described loT device and reader and the respective methods.

Moreover, it is noted that the loT device as described in the above, for example in any of the above embodiments, implementations, modifications, solutions, variants and examples, may be integrated on an integrated circuit (IC). Moreover, the integration does not necessary include the entire transceiver. The transceiver is, in general, not necessarily a part of the loT device. The loT device may be connected to an external antenna (module) connected to the loT device over a port on the loT device. Similar structure applies to the reader. Further, in the above, in particular the loT device has been describe. Any of the integration to the loT device may be integrated in the node.

Moreover, a computer program is provided including code instructions stored on a non-transitory medium, which when executed on one or more processor, causes the one or more processors to execute a method according to any of the above-mentioned embodiments and examples.

### RRC connection setup and reconfiguration procedures

Interactions between a UE, gNB, and AMF (an 5GC entity) in the context of a transition of the UE from RRC_IDLE to RRC_CONNECTED for the NAS part are described(see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate ULand DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

FIG. 19 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a statellite or a High Altitude Pseudo Statellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a statellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

The following numerated clauses relate to aspects of the invention.

Aspect 1: An Internet of Things, loT, device comprising: a transceiver, which in operation, transmits a response to a message in a first access procedure with a reader; anda circuitry, which in operation, determines whether to start a re-access timer for receiving, during a feedback period, feedback on the response transmitted in the first access procedure.

Aspect 2: The loT device according to aspect 1, wherein in case the circuitry, in operation, determines to start the re-access timer, the circuity, in operation determines that a last communicated message has failed based on at least one of the re-access timer expiration; a re-transmission request for the response; and a feedback from reader.

Aspect 3: The loT device according to aspect 2, wherein the circuitry, in operation, if determining that the last communicated message has failed, initiates a second access procedure controlled by the reader, optionally initiates the second access procedure at a next access opportunity controlled by the reader; optionally wherein the second access procedure comprises at least one of: an re-access procedure; an inventory procedure; and a command procedure.

Aspect 4: The loT device according to any one of aspects 1 to 3, wherein in case the circuitry, in operation, determines not to start the re-access timer, the circuitry, in operation, determines whether the first access procedure was successful based on a communication mechanism of the loT device.

Aspect 5: The loT device according to aspect 4, wherein the communication mechanism comprises starting a re-transmission timer in response to transmitting the response for receiving, during a communication time period, a request for retransmitting data related to the first access procedure; optionally, wherein the circuity, in operation, determines that the first access procedure was successful upon expiry of the re-transmission timer.

Aspect 6: The loT device according to any of aspects 4 to 5, wherein the communication mechanism comprises operating the loT device in a low-power operation state; optionally wherein the circuitry, in operation, determines a low-power--period-threshold and determines that the first access procedure failed based on unavailability of the feedback within the operation of the loT device in the low-power operation state below the low-power-period-threshold'.

Aspect 7: The loT device according to any of aspects 4 to 5, wherein communication mechanism comprises operating the loT device in an operation state for communicating with the reader, optionally wherein the circuitry, in operation, determines that the first access procedure was successful in response to operate the loT device in the operation state for transmitting data for a minimum on-time period.

Aspect 8: The loT device according to any of aspects 1 to 7, wherein the circuitry, in operation, determines based on an energy condition and an energy indication for indicating an amount of energy stored by the loT device, whether the first access procedure was successful.

Aspect 9: The loT device according to aspect 8, wherein the energy condition comprises at least one threshold and the circuity, in operation determines whether the first access procedure was successful based on amount of energy stored by the loT and the at least one threshold; optionally wherein the circuity, in operation determines in case the re-access timer is started that the first access procedure has failed if the amount of energy stored by the loT is less than a first threshold and no feedback is received before the amount of energy stored by the loT is greater than the second threshold and/or the circuity, in operation determines in case the re-access timer is not started that the first access procedure was successful if the amount of energy stored by the loT becomes greater than a second threshold, optionally wherein the loT device initiates a second access procedure if the amount of energy stored by the loT becomes greater than a second threshold.

Aspect 10: The loT device according to any one of aspects 1 to 9, wherein the circuitry, in operation, starts a communication timer after transmitting the response for communicating, during a communication time period, a next message with the reader.

Aspect 11: The loT device according to aspect 10, wherein the circuitry, in operation determines an energy stored in an energy storage unit of the loT device and determines the communication time period based on the energy stored in the energy storage unit.

Aspect 12: The loT device according to aspect 11, wherein the communication time period is configured for the loT device and the circuitry, in operation, reduces the configured communication time period based on the energy stored in the energy storage unit.

Aspect 13: The loT device according to any one of aspects 10 to 12, wherein the communication timer is a re-transmission timer for receiving, during the communication time period, a request for retransmitting data related to the first access procedure; optionally wherein the data related to the first access procedure comprise data related to the last transmitted response.

Aspect 14: The loT device according to aspect 13, further comprising a memory unit and the memory unit, in operation, is configured for storing data related to the first access procedure during the communication time period, optionally wherein the circuitry, in operation, determines to clear the memory unit upon expiry of the re-transmission timer, optionally wherein the memory unit comprises a volatile memory unit.

Aspect 15: The loT device according to aspect 14, further comprising an energy storage unit and the energy storage unit is configured to supply power to the memory unit, optionally wherein energy storage unit comprises or consists of a capacitor.

Aspect 16: The loT device according to any of aspect 13 to 15, wherein data related to the first access procedure comprise at least one of a random identification, ID; and a pointer pointing to data stored at an upper layer of the loT device.

Aspect 17: The loT device according to any of aspects 10 to 16, wherein the communication timer expires before the re-access timer expires.

Aspect 18: The loT device according to any of aspects 10 to 17, wherein the re-access timer starts after expiry of the communication timer.

Aspect 19: The loT device according to any of aspects 1 to 18, wherein the re-access timer starts upon transmitting the response.

Aspect 20: The loT device according to any of aspects 1 to 19, wherein the transceiver, in operation, receives timer-configuration-information for a configuration of the re-access timer, the configuration of the re-access timer for determining the feedback period; optionally wherein the loT device according to any of aspects 10 to 19, wherein the transceiver, in operation, receives timer-configuration-information for a configuration of the retransmission timer, the configuration of the retransmission timer for determining the communication time period.

Aspect 21: The loT device according to aspect 20, wherein the loT device is configured with at least one re-access timer configuration, optionally wherein the circuitry, in operation, determines whether to change the at least one re-access timer configuration based on the timer-configuration-information.

Aspect 22: The loT device according to any of aspects 20 to 21, wherein the loT device is configured with a plurality of re-access timer configurations and the circuitry, in operation, selects a re-access timer configuration based on the timer-configuration-information.

Aspect 23: The loT device according to any of aspects 20 to 22, wherein at least one of the re-access timer configurations is associated with an identification, ID, for identifying at least one loT device.

Aspect 24: The loT device according to aspect 23, wherein the ID is a group ID for identifying a plurality of loT devices or a device ID for identifying the loT device.

Aspect 25: The loT device according to any of aspects 20 to 24, wherein the timer-configuration-information comprises a re-access timer configuration and/or a configuration of the retransmission timer.

Aspect 26: The loT device according to aspect 25, wherein the circuitry, in operation, applies the received re-access timer configuration.

Aspect 27: The loT device according to any of aspects 20 to 26, wherein the message comprises the timer-configuration-information, optionally wherein the message is an initial message for the first access procedure.

Aspect 28: loT device according to any of aspects 1 to 27, wherein the first access procedure comprises at least one of: an initial access procedure; a re-access procedure; an inventory procedure; and a command procedure.

Aspect 29: A method comprising the following steps performed by an Internet of Things, loT, device: transmitting a response to a message in a first access procedure with a reader; and determining whether to start a re-access timer for receiving, during a feedback period, feedback on the response transmitted in the first access procedure.

Aspect 30: A reader comprising a transceiver, which in operation, transmits in a first access procedure a message to an Internet of Things, loT, device; and a circuitry, which in operation, determines whether the loT device starts a re-access timer for receiving, during a feedback period, feedback on a response to the message transmitted in the first access procedure.

Aspect 31: The reader according to aspect 30, wherein the circuitry, in operation, determines whether the loT device starts a communication timer after transmitting the response for communicating, during a communication time period, a next message with the reader; optionally wherein the communication timer is a re-transmission timer for transmitting, during the communication time period, by the transceiver a response to a request for retransmitting data related to the first access procedure.

Aspect 32: The reader according to any of aspects 30 to 31, wherein the transceiver, in operation, transmits timer-configuration-information for a configuration of the re-access timer, the configuration of the re-access timer for determining the feedback period; optionally wherein the reader according to aspect 31, wherein the transceiver, in operation, transmits timer-configuration-information for a configuration of the retransmission timer, the configuration of the retransmission timer for determining the communication time period.

Aspect 33: A method comprising the following steps performed by a reader: transmitting in a first access procedure a message to an Internet of Things, loT, device; and determining whether the loT device starts a re-access timer for receiving, during a feedback period, feedback on a response to the message transmitted in the first access procedure.

## Claims

1. An Internet of Things, loT, device comprising:
a transceiver, which in operation, transmits a response to a message in a first access procedure with a reader; and
a circuitry, which in operation, determines whether to start a re-access timer for receiving, during a feedback period, feedback on the response transmitted in the first access procedure.

2. The loT device according to claim 1, wherein in case the circuitry, in operation, determines to start the re-access timer, the circuity, in operation determines that a last communicated message has failed based on at least one of
• the re-access timer expiration;
• a re-transmission request for the response; and
• a feedback from reader.
optionally wherein the circuitry, in operation, if determining that the last communicated message has failed, initiates a second access procedure controlled by the reader,
optionally initiates the second access procedure at a next access opportunity controlled by the reader;
optionally wherein the re-access timer starts upon transmitting the response;
optionally wherein the second access procedure comprises at least one of:
• an re-access procedure;
• an inventory procedure; and
• a command procedure.

3. The loT device according to any one of claims 1 to 2, wherein in case the circuitry, in operation, determines not to start the re-access timer, the circuitry, in operation, determines whether the first access procedure was successful based on a communication mechanism of the loT device;
optionally wherein the communication mechanism comprises at least one of
starting a re-transmission timer in response to transmitting the response for receiving, during a communication time period, a request for retransmitting data related to the first access procedure, optionally, wherein the circuity, in operation, determines that the first access procedure was successful upon expiry of the re-transmission timer;
operating the loT device in a low-power operation state; optionally wherein the circuitry, in operation, determines a low-power--period-threshold and determines that the first access procedure failed based on unavailability of the feedback within the operation of the loT device in the low-power operation state below the low-power-period-threshold; and
operating the loT device in an operation state for communicating with the reader, optionally wherein the circuitry, in operation, determines that the first access procedure was successful in response to operate the loT device in the operation state for transmitting data for a minimum on-time period.

4. The loT device according to any of claims 1 to 3, wherein the circuitry, in operation, determines based on an energy condition and an energy indication for indicating an amount of energy stored by the loT device, whether the first access procedure was successful;
optionally wherein the energy condition comprises at least one threshold and the circuity, in operation determines whether the first access procedure was successful based on amount of energy stored by the loT and the at least one threshold;
optionally wherein the circuity, in operation determines in case the re-access timer is started that the first access procedure has failed if the amount of energy stored by the loT is less than a first threshold and no feedback is received before the amount of energy stored by the loT is greater than the second threshold and/or the circuity, in operation determines in case the re-access timer is not started that the first access procedure was successful if the amount of energy stored by the loT becomes greater than a second threshold,
optionally wherein the loT device initiates a second access procedure if the amount of energy stored by the loT becomes greater than a second threshold.

5. The loT device according to any one of claims 1 to 4, wherein the circuitry, in operation, starts a communication timer after transmitting the response for communicating, during a communication time period, a next message with the reader;
optionally wherein the circuitry, in operation determines an energy stored in an energy storage unit of the loT device and determines the communication time period based on the energy stored in the energy storage unit;
optionally wherein the communication time period is configured for the loT device and the circuitry, in operation, reduces the configured communication time period based on the energy stored in the energy storage unit;
optionally wherein the re-access timer starts after expiry of the communication timer.

6. The loT device according to claim 5, wherein the communication timer is a re-transmission timer for receiving, during the communication time period, a request for retransmitting data related to the first access procedure;
optionally wherein the data related to the first access procedure comprise data related to the last transmitted response;
optionally wherein data related to the first access procedure comprise at least one of a random identification, ID, and a pointer pointing to data stored at an upper layer of the loT device.

7. The loT device according to claim 6, further comprising a memory unit and the memory unit, in operation, is configured for storing data related to the first access procedure during the communication time period,
optionally wherein the circuitry, in operation, determines to clear the memory unit upon expiry of the re-transmission timer;
optionally wherein the memory unit comprises a volatile memory unit; .
optionally wherein the loT further comprises an energy storage unit and the energy storage unit is configured to supply power to the memory unit, optionally wherein energy storage unit comprises or consists of a capacitor.

8. The loT device according to any of claims 1 to 7, wherein the transceiver, in operation, receives timer-configuration-information for a configuration of the re-access timer, the configuration of the re-access timer for determining the feedback period optionally wherein the loT device according to any of claims 4 to 7, wherein the transceiver, in operation, receives timer-configuration-information for a configuration of the retransmission timer, the configuration of the retransmission timer for determining the communication time period.

9. The loT device according to claim 8, wherein the loT device is configured with at least one re-access timer configuration,
optionally wherein the circuitry, in operation, determines whether to change the at least one re-access timer configuration based on the timer-configuration-information;
optionally wherein the loT device is configured with a plurality of re-access timer configurations and the circuitry, in operation, selects a re-access timer configuration based on the timer-configuration-information.

10. The loT device according to any of claims 8 to 9, wherein at least one of the re-access timer configurations is associated with an identification, ID, for identifying at least one loT device;
optionally wherein the ID is a group ID for identifying a plurality of loT devices or a device ID for identifying the loT device.

11. The loT device according to any of claims 8 to 10, wherein the timer-configuration-information comprises a re-access timer configuration and/or a configuration of the retransmission timer;
optionally wherein the circuitry, in operation, applies the received re-access timer configuration.

12. The loT device according to any of claims 8 to 11, wherein the message comprises the timer-configuration-information, optionally wherein the message is an initial message for the first access procedure.

13. loT device according to any of claims 1 to 12, wherein the first access procedure comprises at least one of:
• an initial access procedure;
• a re-access procedure;
• an inventory procedure; and
• a command procedure.

14. A method comprising the following steps performed by an Internet of Things, loT, device:
transmitting a response to a message in a first access procedure with a reader; and
determining whether to start a re-access timer for receiving, during a feedback period, feedback on the response transmitted in the first access procedure.

15. A reader comprising
a transceiver, which in operation, transmits in a first access procedure a message to an Internet of Things, loT, device; and
a circuitry, which in operation, determines whether the loT device starts a re-access timer for receiving, during a feedback period, feedback on a response to the message transmitted in the first access procedure.
